# EUROPEAN PATENT APPLICATION

(11) **EP 1 428 562 A2**
(43) Date of publication of application: **16.06.2004**
(21) Application number: 03028118.2
(22) Date of filing: 05.12.2003
(51) Int. Cl.: A63F 13/10

(54) **Video game that displays player characters of multiple players in the same screen**

(30) Priority: 09.12.2002 JP 2002357268
(71) Applicant: Kabushiki Kaisha Square Enix, Tokyo 151-8544 (JP)
(72) Inventor: Tsuchiya, Yuuichi, Shibuya-ku Tokyo 151-8544 (JP)
(74) Representative: Grünecker, Kinkeldey, Stockmair & Schwanhäusser Anwaltssozietät

(57) **Abstract**

In a virtual three-dimensional space, at least multiple player characters and a movable special object exist. The multiple player characters move in the virtual three-dimensional space according to operations of each player. The special object can be moved in the virtual three-dimensional space according to operations of each player character. An image, which is perspective-transformed in a state that a visual axis of a virtual camera is directed to the direction of the special object, is displayed as a game screen. An area, which is within a predetermined distance from the special object, is fixed as a safety zone. Hit points of the player characters, which are within the safety zone, do not decrease. However, hit points of the player characters, which are outside the safety zone, decrease.

## Description

### CROSS REFERENCE TO RELATED APPLICATION

The present disclosure relates to subject matter contained in Japanese Patent Application No. 2002-357268, filed on December 9, 2002, the disclosure of which is expressly incorporated herein by reference in its entirety.

### BACKGROUND OF THE INVENTION

### Field of the Invention

The present invention relates to a video game in which multiple players move their player characters in a virtual space and the multiple characters are displayed on the same screen.

### Description of the Related Art

A role playing game is a game in which players advance the game by solving various tasks given in the process of the game while moving their player characters in a virtual space. An action game, a simulation game, an adventure game and the like also include a game in which players advance the game by moving their player characters in the virtual space.

Multiple controllers for controlling the player characters can be attached to a game apparatus for home use (video game apparatus) that is a terminal for executing these games, and multiple players can participate in the same game using the respective controllers. Since the number of display devices (television receiver in a normal case) that can be connected to the game apparatus for home use is generally one, the contents of the game advanced by the multiple players are displayed on the same screen.

For example, in a role playing game, multiple players individually move their player characters in the virtual space. Each player character discovers a new task by moving in the virtual space and battles with a monster character that is controlled by a system. When this situation is displayed on one screen with the same size, when each player character is freely moved in the virtual space, a possibility can arise where one of characters will move outside a display range of the screen.

In order to prevent such a problem, the range of the virtual space displayed on the screen can be changed according to the range where each player character exists. In this case, when a distance among the player characters is short, no problem occurs even if the display range of the screen is decided such that all player characters can be visually identified. However, if the display range of the screen is decided such that all player characters can be visually identified when the distance among the player characters is great, a problem will occur where the size of each player character to be displayed becomes extremely small.

In a game program, each player character can be prevented from moving to an area other than an area where each player character is displayed on the screen. However, this limits movement of each player character, possibly decrease interest in the game. Specifically, an area displayed on the screen, namely, an area within the virtual space where the player characters can move is decided by the program, and this concept raises a possibility that the game will become less interesting.

The screen can also be divided for each player and the virtual space mainly including each player character can be displayed in each screen. However, in this case, since the screen size for each player becomes small, there is a problem in which visibility will be decreased. Moreover, constant display of his/her player character makes it difficult for each player to grasp the positional relationship between his/her player character and other player characters. This raises a possibility that the game will become less interesting in view of the point that multiple players can participate in the same game.

In the video game that advanced when the multiple players moved their player characters in the virtual space, a tradeoff was established between the degree of freedom of movement of each player character and the visibility of the game screen. This tradeoff was not able to be resolved by the methods that were conventionally considered. Both the game creator and the players strongly desire that this tradeoff is resolved.

### SUMMARY OF THE INVENTION

An object of the present invention is to provide a video game that displays the respective player characters in the same screen while maintaining a degree of freedom of movement of each player character in the video game that advances when multiple players move their player characters in a virtual space.

In order to attain the above object, a video game apparatus according to a first aspect of the present invention advances a game when multiple players move their player characters in a virtual space. The video game apparatus includes multiple input devices that are provided to correspond to each of the multiple players to input an instruction to each player character according to an operation of each player. The video game apparatus further includes a player character mover that moves each player character in the virtual space based on the input instruction. The video game apparatus further includes an object mover that moves a predetermined object in the virtual space. The video game apparatus further includes a display controller that causes a display device to display a part of the virtual space with reference to the object. The video game apparatus further includes a position judge that determines a positional relationship between each player character and the object. The video game apparatus further includes a game progress controller that changes at least one of a degree of advantage of a game progress and a degree of ease for each player character according to the determined positional relationship of each player character.

In the video game apparatus, each player character can move in the virtual space without being subjected to positional limitations. The degree of advantage of the game progress and/or the degree of ease changes depending on the positional relationship between each player character and the object. In order to advance the game advantageously by the player, each player character will move close to the object in the virtual space. As a result, the video game apparatus can display each player character in the same screen. Since there is no need to divide the display screen for each player character, the player can see the game progress with a large screen to prevent visibility from being lost.

The object mover may simply move the object, and the object does not always have to be constantly moved. The object may temporarily stop at the same position. The object may be moved in the virtual space only when a predetermined condition such as performance of a predetermined operation occurs.

The change in the degree of advantage or the degree of ease may be relatively set by the game progress controller. The degree of advantage or the degree of ease may decrease to be lower than the criterion when the position of each character moves away from the object The degree of advantage or the degree of ease may increase to be higher than the criterion when the position of each character moves close to the object.

In order to attain the above object, a video game apparatus according to a second aspect of the present invention advances a game when multiple players move their player characters in a virtual space. The video game apparatus includes a memory that stores a game program and a processor that executes the game program. The video game apparatus further includes multiple input devices provided to correspond to each of the multiple players. The video game apparatus further includes a display device that displays a processing result of the processor. The game program causes the processor to input an instruction to a player character of each player from the multiple operation inputting devices. The game program further causes the processor to move each player character in the virtual space based on the input instruction. The game program further causes the processor to move a predetermined object in the virtual space. The game program further causes the processor to cause the display device to display a part of the virtual space with reference to the object. The game program further causes the processor to determine a positional relationship between each of the player characters and the object. The game program further causes the processor to change at least one of a degree of advantage of a game progress and a degree of ease for each player character according to a determination result on the positional relationship of each player character.

The video game program stored in the memory in the video game apparatus according to the second aspect of the present invention can be recorded on a computer-readable storage medium. The computer-readable storage medium may be a storage medium constructed to be movably loaded on the computer apparatus and provided separately from the computer apparatus. The computer-readable storage medium may be a storage medium such as a fixed disc device that is included in the computer apparatus and provided together with the computer apparatus. In the video game program stored in the memory according to the second aspect of the present invention, the data signal can be superimposed on a carrier wave from a server apparatus existing on a network and the result is distributed via the network.

In the video game apparatuses according to the first and second aspects, it is possible to use a general-purpose computer such a personal computer, etc., in addition to the video game dedicated apparatus. In the video game apparatuses according to the first and second aspects, it is possible to use electronic equipment capable of operating as a computer apparatus such as a cellular phone, etc. Moreover, the apparatuses may be a portable type or a stationary type.

In order to attain the above object, a video game progress control method according to a third aspect of the present invention includes inputting an instruction to a player character of each player from the multiple operation inputting devices provided to correspond to each of the multiple players. The video game progress control method further includes moving each player character in the virtual space based on the input instruction. The video game progress control method further includes moving a predetermined object in the virtual space. The video game progress control method further includes causing a display device to display a part of the virtual space with reference to the object. The video game progress control method further includes determining a positional relationship between each of the player characters and the object. The video game progress control method further includes changing at least one of a degree of advantage of a game progress and a degree of ease for each player character according to a determination result on the positional relationship of each player character.

### BRIEF DESCRIPTION OF THE DRAWINGS

FIG. 1 is a block diagram illustrating a configuration of a video game apparatus according to an embodiment of the present invention;
FIG. 2 is a block diagram illustrating a configuration of a portable game apparatus connected to the computer of FIG. 1;
FIG. 3 is a view schematically illustrating processing for perspective transformation of a virtual three-dimensional space to perform displaying;
FIG. 4 is a view illustrating a configuration of data stored in a RAM of FIG 1;
FIG. 5 is a flowchart illustrating a main processing in a video game according to an embodiment of the present invention;
FIG. 6 is a view explaining movement of a viewpoint of a virtual camera;
FIG. 7 is a view illustrating an example of a display screen in a video game according to an embodiment of the present invention;
FIG. 8 is a view illustrating an example of a display screen in a video game according to an embodiment of the present invention;
FIG. 9 is a view illustrating an example of a display screen in a video game according to an embodiment of the present invention;
FIG. 10 is a flowchart illustrating processing in a first modification;
FIG 11 is a view illustrating an example of a display screen in the first modification;
FIG 12 is a flowchart illustrating processing in a second modification;
FIG 13 is a flowchart illustrating processing in a third modification;
FIG 14 is a view illustrating an example of a display screen in the third modification;
FIGS. 15A and FIG 15B are views each explaining movement of a viewpoint of a virtual camera in a fourth modification;
FIG 16 is a flowchart illustrating processing in a fifth modification;
FIGS. 17A and FIG 17B are views each explaining movement of a viewpoint of a virtual camera in a fifth modification;
FIGS. 18A and 18B are views each illustrating an example of a display screen in the fifth modification;
FIG 19 is a view illustrating an example of a display screen in a sixth modification;
FIG 20 is a view illustrating an example of a display screen and an example of a screen of a portable game apparatus in a seventh embodiment; and
FIG 21 is a view illustrating an example of a display screen in an eighth modification.

### DETAILED DESCRIPTION OF PREFERRED EMBODIMENT

Embodiments of the present invention will be specifically described with reference to the drawings.

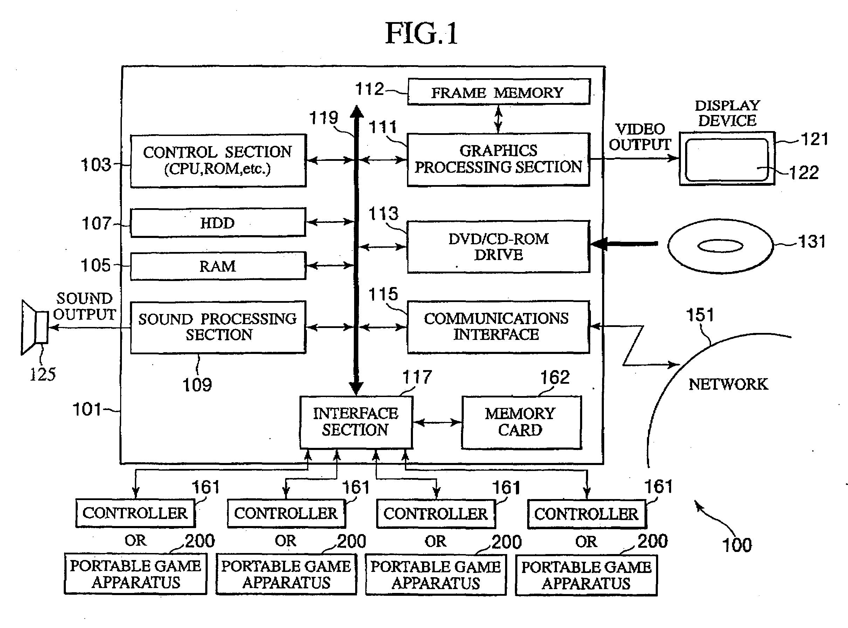

FIG 1 is a block diagram illustrating a configuration of a video game apparatus applied to this embodiment. As illustrated in the figure, a video game apparatus 100 is mainly constructed to include a video game main body 101. The video game main body 101 includes a control section 103, a RAM (Random Access Memory) 105, a hard disk drive (HDD) 107, a sound processor 109, a graphics processor 111, a DVD/CD-ROM drive 113, a communications interface 115, and an interface section 117. The control section 103, the HDD 107, the sound processor 109, the graphics processor 111, the DVD/CD-ROM drive 113, the communications interface 115, and the interface section 117 are connected to an internal bus 119.

The sound processor 109 of the video game main body 101 is connected to a sound output device 125, which is a speaker, and the graphics processor 111 is connected to a display device 121 having a display screen 122. A storage medium (DVD-ROM or CD-ROM) 131 can be attached to the DVD/CD-ROM drive 113. The communications interface 115 is connected to a network 151.

A memory card 162 is connected to the interface section 117. At the maximum four controllers (input sections) 161 can be connected to the interface section 117. A portable game apparatus 200 can be connected thereto using a communications cable (not shown) in place of the controller 161. When the portable game apparatus 200 is connected to the interface section 117, the controller (to be described later) of the portable game apparatus 200 can be used as a controller for the video game apparatus 100.

The control section 103 includes a CPU (Central Processing Unit), a ROM (Read Only Memory), etc., and executes a program stored on the HDD 107 or the storage medium 131 to control the video game apparatus 100. The control section 103 has an internal timer. The RAM 105 is a work area for the control section 103. The HDD 107 is a storage area for storing a program and data. In the case where a program executed by the control section 103 instructs the sound processor 109 to output a sound, the sound processor 109 interprets the instruction and outputs a sound signal to the sound output device 125.

The graphics processor 111 develops an image onto the frame memory 112 and outputs a video signal, which displays the image on the display screen 122 of the display device 121 according to a drawing command output from the control section 103. It is assumed that one frame time of the image included in the outputting video signal is, for example, 1/30 sec. The DVD/CD-ROM drive 113 reads the program and data from the storage medium 131. The communications interface 115 is connected to the network 151 to perform communications with other computers other than the portable game apparatus 200. As a matter of fact, in this embodiment, the game is not advanced by communications between the video game apparatus 100 and other computers.

The interface section 117 outputs input data sent from the input section 161 to the RAM 105, and the control section 103 interprets it to carry out arithmetic processing. The input section 161 includes a directional key and multiple operation keys, moves a character (to be described later) by the operation of the directional key, and performs a predetermined processing by the operation of the operation keys.

The interface section 117 forwards data, indicative of the progress of the game stored in the RAM 105, to the memory card 162 based on the instruction from the control section 103. The interface section 117 reads data of the game stored in the memory card 162 at the time of suspending the game, and transfers the read data to the RAM 105. Regarding a case in which the portable game apparatus 200 is connected to the interface section 117, this will be specifically described later in the explanation of the portable game apparatus 200.

The program and data for performing the game by the video game apparatus 100 are first stored on, for example, the storage medium 131. The program and data are read by the DVD/CD-ROM drive 113 and loaded onto the RAM 105 at the time of execution. A semiconductor memory card may be applied as the storage medium 131 in place of a DVD-ROM or CD-ROM. A card slot for inserting the memory card may be formed in place of the DVD/CD-ROM drive 113. The control section 103 processes the program and data loaded onto the RAM 105, outputs a drawing command to the graphics processor 111, and outputs an instruction of a sound output to the sound processor 109. Intermediate data is stored in the RAM 105 while the control section 103 performs processing.

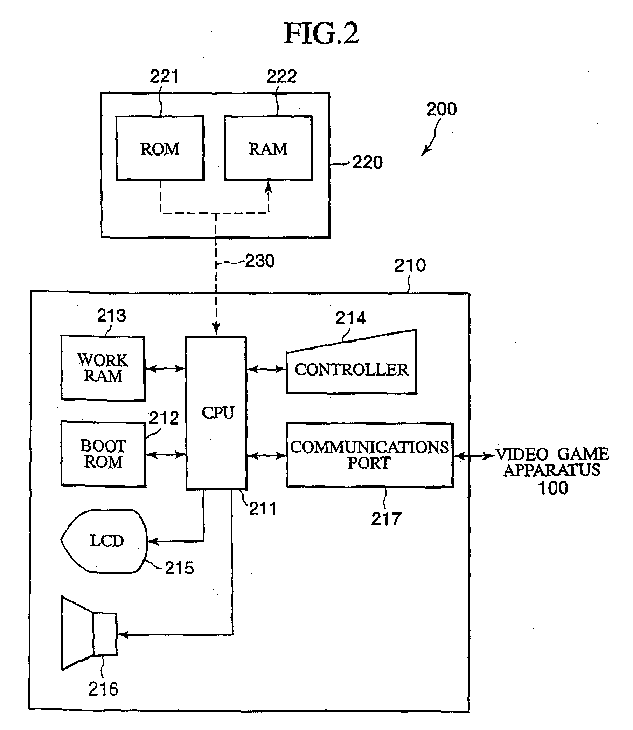

FIG 2 is a block diagram illustrating a configuration of the portable game apparatus 200 of FIG. 1. As is illustrated, the portable game apparatus 200 includes a game apparatus main body 210 and a cartridge 220, which is inserted into the slot of the game apparatus main body 210. The cartridge 220 is different for each kind of game. In the case where the portable game apparatus 200 is connected to the video game apparatus 100 in place of the controller 161, the cartridge 220 may not be used.

The game apparatus main body 210 includes a CPU 211, a boot ROM 212, a work RAM 213, a controller 214, an LCD (Liquid Crystal Display) 215, a speaker 216, and a communications port 217. The cartridge 220 includes a ROM 221, and a RAM 222. The CPU 211 of the game apparatus main body 210 is connected to the ROM 221 and RAM 222 of the cartridge 220 via a connector 230.

The respective structural components 212 to 217 of the game apparatus main body 210 and the ROM 221 and the RAM 222 of the cartridge 220 are connected to the CPU 211. The CPU 211 executes a program stored in the boot ROM 212 and the ROM 222 or a program downloaded on the work RAM 213 from the video game apparatus 100 to control the portable game apparatus 200. The boot ROM 212 prestores a boot program for initializing the work RAM 213 of the game apparatus main body 210 and registers of the CPU 211. The work RAM 213 stores the program downloaded from the video game apparatus 100 and is also used as a work area where the CPU 211 executes the program.

The controller 214 includes a directional key and multiple operation keys similar to the controller 161 of the video game apparatus 100. Similar to the directional key and multiple operation keys of the controller 161, an instruction from the player is input to the controller 214. The LCD 215 displays an image, which is generated according to the execution of the game program by the CPU 211, on the screen. There is a case in which an image sent from the video game apparatus 100 is displayed on the LCD 215. The speaker 216 outputs sound effects, that are appropriate to the game progress, according to the execution of the game program by the CPU 211. The communications port 217 is connected to the video game apparatus 100 via the aforementioned cable, and receives and transmits information from/to the video game apparatus 100.

The video game according to this embodiment is advanced when multiple (for example, at the maximum four) players operate their controllers 161 (or controllers 214) to move their player characters in a virtual three-dimensional space. In addition to the player characters, non-player characters (monster and the like) and a special object move on the virtual three-dimensional space (they do not have to move and they may temporarily stop at one location in an actual case). The special object may be moved according to the operation of the player character or non-player character.

An area of a sphere that has a radius that is a predetermined distance from the special object is set as a safety zone for the player character. The respective player characters can move freely in the virtual three-dimensional space regardless of whether they are within the safety zone. In actuality, it is assumed that the player character that is outside of the safety zone is being poisoned, and an HP (hit point showing the limit of a damage quantity where the player character can be damaged) is reduced. The status means the state of the player character that is changeable according to the game progress. This includes states that change in only one stage, states that change in multiple stages, and states that change in a continuous manner (e.g., HP).

The range of the safety zone is shown to the player by providing a predetermined display effect to a position where the sphere and geographic data cross each other, namely, a boundary of the safety zone. When the player character is out of the range of the safety zone, the display effect is also provided to the player character. The state that the game progresses in this way is displayed on the display screen 122 by perspective-transforming the virtual three-dimensional space by a virtual camera and recognized by each player.

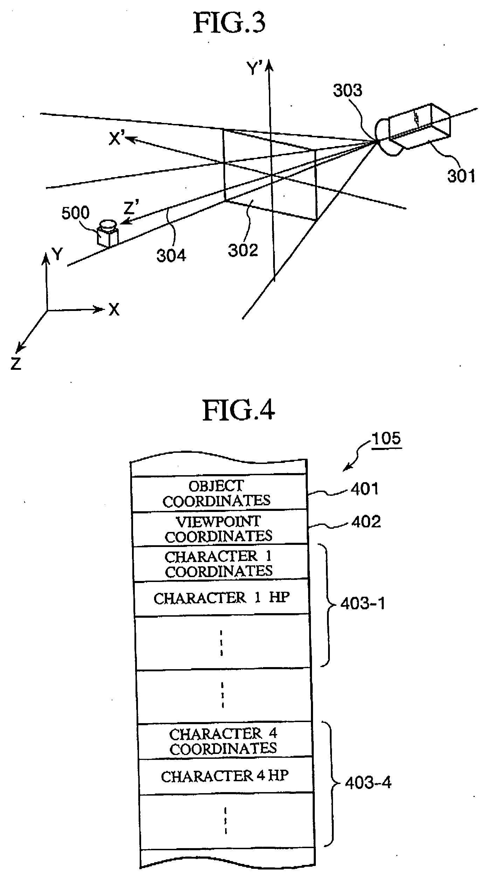

FIG. 3 schematically illustrates the state of the perspective transformation. A virtual camera 301 is placed in the virtual three-dimensional space and an image projected on a virtual screen 302 is displayed on the display screen 122. The position of the virtual camera 301 is a viewpoint 303, the direction of the virtual camera 301 is a visual axis (optical axis) 304, an area that is formed by four straight lines obtained by connecting the viewpoint 303 to four comers of the virtual screen 302 is a field of view. The visual axis 304 is always directed to a special object 500 (actually, a reference point provided at its center).

A coordinate system used to project an image on the virtual screen 302 in this way is a viewpoint coordinate system (X', Y', Z'), and the direction of the visual axis 304 is a Z' axis of the viewpoint coordinate system. The coordinates (including coordinates transformed from coordinates of a local coordinate system used in connection with the characters and the special object 500) of a world coordinate system (X, Y, Z) used in the virtual three-dimensional space are transformed to the coordinates of the viewpoint coordinate system, and processing for perspective transformation that includes hidden surface removal processing is performed.

In the case of generating an image projected on the virtual screen 302 by perspective transformation, it is necessary to carry out hidden surface removal that removes a surface hidden by another object placed at the front surface. A Z buffer method is used for the hidden surface removal. When data of all surfaces projected on the virtual screen 302 is stored to a Z buffer provided in the graphics processing section 111, it is shown whether or not there is an obstacle at the front surface side of the special object 500. However, before storing data to the Z buffer, it is determined whether or not there is an obstacle on a straight line between the viewpoint 303 and the special object 500. When there is an obstacle, the position of the viewpoint 303 is moved. Even if the distance between the viewpoint 303 and the special object 500 exceeds a predetermined distance, the position of the viewpoint 303 is moved.

The state that the game progresses in this way is displayed on the display screen 122 by directing the visual axis 304 to the special object 500 to perspective-transform the virtual three-dimensional space onto the virtual screen 302. However, depending on the player's operation, there is a possibility that any one or more of the player characters will exist out of the range of the display screen 122. In this case, a two-dimensional radar map indicating the position of the player character is also displayed on the display screen 122. As a result, various kinds of information (for example, a status bar showing HP of each player character, an instruction on the operation of the player character) necessary for advancing the game are also displayed on the display screen 122.

An explanation will next be given to variable data used in the video game according to this embodiment. FIG. 4 is a view illustrating a configuration of data stored in the RAM 105 of the video game apparatus 100. As illustrated in the figure, the RAM 105 stores object coordinates 401, viewpoint coordinates 402, and player character data 403-1 to 403-4 corresponding to four player characters.

The object coordinates 401 are coordinates (Xₒ, Yₒ, Zₒ) of the world coordinate system of a reference point provided at the special object 500. The viewpoint coordinates 402 are coordinates (Xₚ, Yₚ, Zₚ) of the world coordinate system of the viewpoint 303 of the virtual camera 301. A direction of the visual axis 304 (namely, Z' axis of the viewpoint coordinate system) is fixed to a direction of the object coordinates 401 (Xₒ, Yₒ, Zₒ) from the viewpoint coordinates 402 (Xₚ, Yₚ, Zₚ). It is assumed that the visual axis 304 is not rotated and the X' axis and Y' axis of the viewpoint coordinate system are fixed in accordance with the Z' axis. The range of the safety zone is fixed by the positions of the object coordinates 401 (Xₒ, Yₒ, Zₒ).

Each of player character data 403-1 to 403- 4 includes at least coordinates (X_{c}, Y_{c}, Z_{c}) in the world coordinate system of a reference point provided in each player character and a value of HP of each player character. The coordinates (X_{c}, Y_{c}, Z_{c}) of each player character are used to determine whether each player character is within the range of the safety zone or out of the range and determine whether each player character is within the range of the display screen 122 or out of the range. The coordinate values are updated when the directional key of the controller 161 (or controller 214) is operated to input an instruction on movement of each player character.

When the corresponding player character is out of the safety zone, the value of HP of the player character decreases by a predetermined amount. Even when each player character is damaged by a battle with a monster character, the value of HP is reduced according to an amount of the damage. When a predetermined event such as the start of a recovery magic, the use of a recovery item, and the like occurs, the value of HP of each player character increases. The value of HP is displayed on the display screen 122 as a status bar according to a ratio of a HP maximum value (that may be variable).

The following will explain the video game progress according to this embodiment. In a game scene, a non-player character such as a monster appears in addition to the player characters and moves in the virtual three-dimensional space. When a predetermined condition is established, various events occur. However, it is assumed that only processing that relates to the present invention is explained. Moreover, it is assumed that four controllers 161 are connected to the interface section 117, and the portable game apparatuses 200 are not connected to the interface section 117.

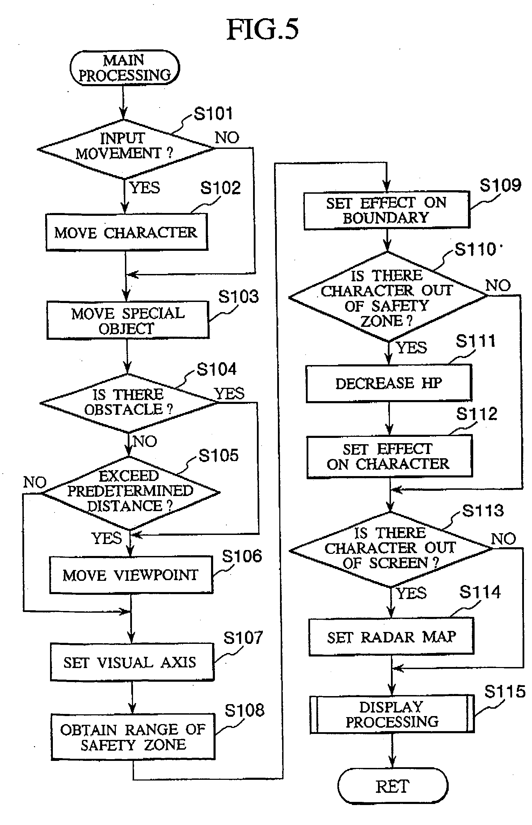

FIG 5 is a flowchart illustrating a main processing in the video game according to this embodiment. The processing in this flowchart is executed by a timer interrupt occurring every frame time (every 1/30 second), and ends within at least one frame time (within 1/30 second). In order to simplify the explanation, it is assumed that the size of the field of view (namely, a distance between the viewpoint 303 and the virtual screen 302) is unchanged.

The control section 103 determines whether data, which is input data from each controller 161 and instructs each player character to move according to the operation of the directional key by the player, is stored in the RAM 105 (step S101). When data that instructs movement is not stored, the processing flow proceeds to step S103. When data that instructs movement is stored, the control section 103 reads the coordinates of the corresponding player character data 403-1 to 403-4 in the previous frame and updates the coordinates based on data that instructs movement to move the position of the player character (step S102). After that, the processing flow proceeds to step S103.

In step S103, when the need for moving the position of the special object 500 arises, the control section 103 reads the object coordinates 401 stored in the RAM 105 and updates the coordinates by an amount corresponding to the movement. The special object 500 may move by itself or be moved by a predetermined operation performed by the player character or the non-player character. A frame period when the special object 500 does not move may be provided.

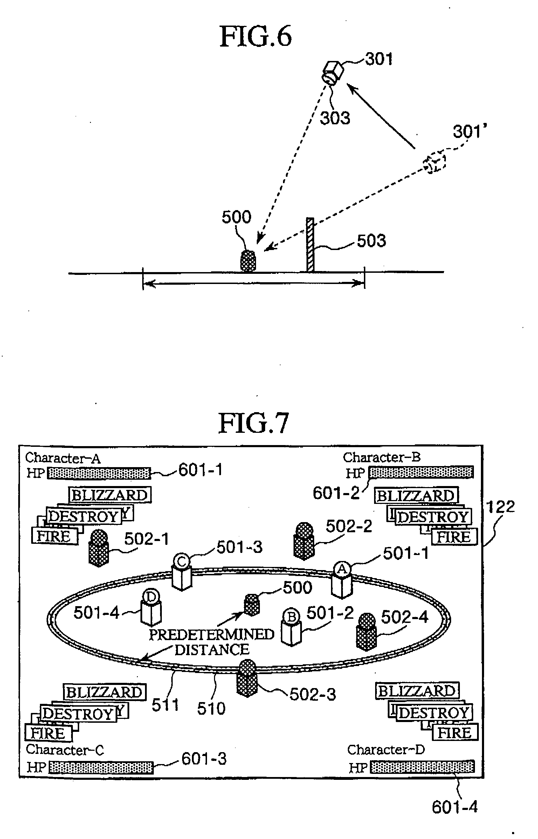

When the processing for moving the position of the special object 500 ends (there is a case in which the special object 500 is not moved), the control section 103 determines whether there is an obstacle 503 (FIG 6), excepting the player characters and non-player character, on a straight line formed by connecting the position of the special object 500 (object coordinates 401) to the position of the viewpoint 303 (viewpoint coordinates 402) of the previous frame (step S104). If there is an obstacle 503, the processing flow proceeds to step S106.

When there is no obstacle, the control section 103 determines whether a distance between the position of the special object 500 (object coordinates 401) and the position of the viewpoint 303 (viewpoint coordinates 402) exceeds a predetermined distance (step S105). When the distance is within the predetermined distance, the processing flow proceeds to step S107. When the distance exceeds the predetermined distance, the processing flow proceeds to step S106.

In step S106, the control section 103 moves the position of the viewpoint 303 (viewpoint coordinates 402) to a position where no obstacle 503 exists and the distance from the position from the special object 500 is within the predetermined distance as schematically illustrated in FIG 6. Then, the processing flow proceeds to step S107. In step S107, the control section 103 sets the direction of the visual axis 304 (Z' axis of the viewpoint coordinate system) to be directed from the position of the viewpoint 303 (viewpoint coordinates 402) to the position of the special object 500 (object coordinates 401).

The control section 103 fixes an area of the sphere having a radius that is a predetermined distance from the position of the special object 500 (object coordinates 401) as a safety zone (step S108). The control section 103 sets a position where the safety zone sphere and geographical data cross each other as a boundary of the safety zone, and sets a predetermined effect on this boundary line (step S109).

The control section 103 determines whether there is at least one player character out of the range of the safety zone fixed in step S108 (step S110). When a distance between the position of each player character (character coordinates) and the position of the special object 500 (object coordinates 401) is greater than the predetermined distance that fixes the range of the safety zone, the control section 103 determines that there is at least one player character out of the safety zone. When none of the player characters are out of the safety zone, the processing flow proceeds to step S113.

When there is at least one player character out of the safety zone, the control section 103 decreases the value of HP of the corresponding player character data 403-1 to 403-4 by a predetermined amount until the value reaches a predetermined value, that is not zero (step S111). The control section 103 sets a predetermined effect in connection with the player character (step S112). Then, the processing flow proceeds to step S113.

In step S 113, the control section 103 determines whether there is at least one player character out of the range of a field of view fixed by the position of the viewpoint 303 (viewpoint coordinates 402), the visual axis 304 set in step S107 and the virtual screen 302, namely, out of the range displayed on the display screen 122. When none of the player characters are out of the range displayed on the display screen 122, the processing flow proceeds to step S115.

When there is at least one player character off the display screen 122, the control section 301 sets a two-dimensional radar map showing the position of the player character (step S 114). In the two-dimensional radar map, a boundary of the safety zone is drawn around the position of the special object 500 to show in which direction of the X' axis and Z' axis of the viewpoint coordinate system the position of the player character is placed relative to the position of the special object 500 by displaying the distance from the position of the special object 500 two-dimensionally. After that, the processing flow proceeds to step S115.

In step S115, the virtual three-dimensional space including the special object 500 is perspective-transformed to the virtual screen 302 from the position of the viewpoint 303 to perform display processing for generating a two-dimensional image to be displayed on the display screen 122. When the display processing in step S115 ends, the control section 103 ends this main processing and executes a new main processing again with a start timing of a next frame period.

In the display processing in step S115, the control section 103 transforms the coordinates of a characteristic point, which forms each surface (geographical data, special object 500, characters, and the like) included in a range to be perspective-transformed, to the coordinates of the viewpoint coordinate system. The range to be perspective-transformed is a range of a field of view that is fixed by the position of the viewpoint 303 (viewpoint coordinates 401), the direction of the visual axis 304 and the position of the virtual screen 302. However, a range which is nearer to the viewpoint 303 than the virtual screen 302 or a range which is more than a fixed distance from the viewpoint 303 is not perspective-transformed.

The control section 103 sends the coordinates of the points, which form each surface, transformed to the viewpoint coordinate system, to the graphics processing section 111 via the RAM 105. The control section 103 also sends information on the effect set to the boundary of the safety zone and the effect set to the player character to the graphics processing section 111. The control section 103 also sends information on the status bar, which is set based upon the HP of each player character, to the graphics processing section 111. If the two-dimensional radar map is set, the control section 103 also sends it to the graphics processing section 111. After that, the control section 103 outputs a drawing command to the graphics processing section 111.

The graphics processing section 111, which receiving the drawing command, updates the contents of the Z buffer such that data (value of Z') of a point placed at the front side (small point of the Z' coordinates) remains in connection with each point that forms each surface based on the coordinates of the viewpoint coordinate system. When the contents of the Z buffer are updated, the graphics processing section 111 develops image data of each surface onto the frame memory 112.

The graphics processing section 111 also develops the effect set to the boundary of the safety zone and the effect set to the player character onto the frame memory 112. The graphics processing section 111 develops the HP status bar and the two-dimensional radar map and the like, as an image of the foremost front side, onto the frame memory 112. The two-dimensional data is thus developed onto the frame memory 112. Though the graphics processing section 111 provides processing such as shading and texture mapping and the like to the developing image data, this is not directly related to the present invention and specific explanation will be omitted.

When all image data is developed onto the frame memory 112, the graphics processing section 111 reads the developed image data sequentially, adds a synch signal to generate a video signal, and outputs it to the display device 121. The display device 121 displays an image corresponding to the video signal output from the graphics processing section 111 as the display screen 122. The player can recognize the game progressing state as a moving image by switching the display screen 122 every frame period.

The following will explain specific examples of the video game progressing state according to this embodiment. FIGS. 7 to 9 are views each illustrating an example of the display screen 122 in the video game according to this embodiment. In order to simplify the explanation, it is assumed that the special object 500, which fixes the direction of the visual axis 304 of the virtual camera 301, stops in the virtual three-dimensional space.

It is assumed that the game was advanced as illustrated in the display screen 122 in FIG 7. In the display screen 122, the visual axis 304 of the virtual camera 301 is directed to the position of the special object 500 and the special object 500 is displayed at the center. A range with a predetermined distance from the position of the special object 500 is used as a safety zone 510, and an effect 511 is displayed on the boundary of the safety zone 510. Non-player characters 502-1 to 502-4 such as monsters and the like are arranged as illustrated in the figure.

Under this state, it is assumed that all four player characters 501-1 to 501-4 are within the safety zone 510. At this time, as shown in status bars 601-1 to 601-4. The HPs of the respective player characters 501-1 to 501-4 do not decrease by reason of their existing positions. Actually, the HPs decrease in response to attacks from the monster and the like in some instances. Although a non-player character 502-3 is out of the range of the safety zone 510, the non-player character 502-3 is not influenced by its existing position since it is not the player character.

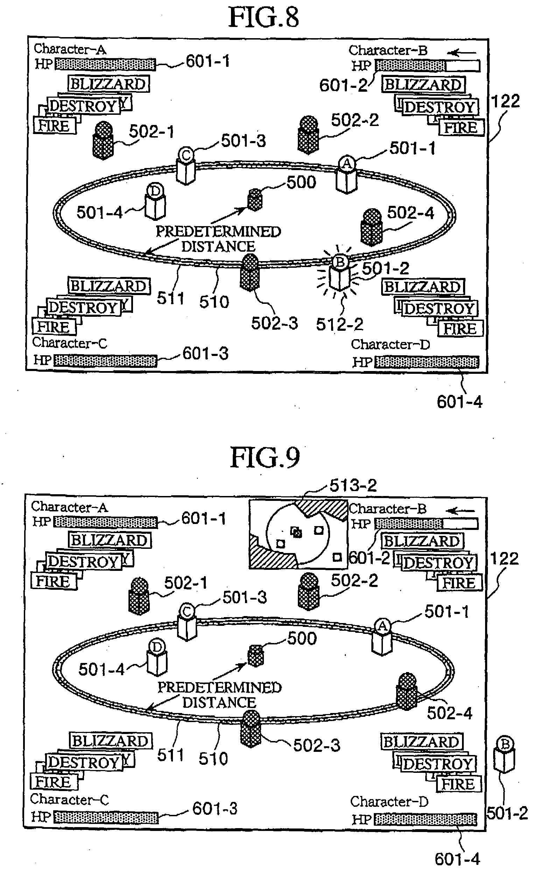

It is assumed that the player character 501-2 moved out of the range of the safety zone 510 some frames later as illustrated in FIG 8. At this time, as shown in the status bar 601-2, the HP of the player character 501-2 decreases. An effect 512-2 is displayed onto the player character 501-2, which is out of the safety zone 510. The player characters 501-1, 501-3 and 501-4, which are within the safety zone 510, are set in the same state as FIG. 7.

Moreover, it is assumed that the player character 501-2 moved out of the range of the display screen 122 some frames later as illustrated in FIG 9. Since the player character 501-2 is also out of the range of the safety zone 510 here, the HP decreases as shown in the status bar 601-2. A radar map 513-2, which shows the position of the player character 501-2, is also displayed on the display screen 122.

As explained above, in the video game according to this embodiment, the respective players can move their player characters 501-1 to 501-4 in the virtual three-dimensional space without being subjected to limitations. When the players move their player characters 501-1 to 501-4 to an area out of the safety zone 510 with a predetermined distance from the special object 500, the HPs decrease, thereby becoming disadvantageous to the game progress. In order to advance the game advantageously, the players will move their player characters 501-1 to 501-4 within the safety zone 510.

Though the respective player characters 501-1 to 501-4 do not lose their degrees of freedom of movement at all, they are within the safety zone 510 in many cases, judging from the way the player advances the game in general. The display screen 122 is one that is perspective-transformed in a state that the visual axis 304 is directed to the position of the special object 500, and the special object 500 is displayed at the center of the display screen 122. The safety zone 510 around the special object 500 can be easily displayed on the display screen 122, with the result that all of the player characters 501-1 to 501-4 can be displayed in the same screen. According to this video game, since the screen is not divided for each of the player characters 501-1 to 501-4, the player can see the game progress with a large screen.

Since whether the HP decreases, namely, a degree of advantage of the game progress changes is decided with reference to the safety zone 510, it is possible to predict a range where the player characters 501-1 to 501-4 will exist. Accordingly, the virtual three-dimensional space is perspective-transformed to make it possible to easily decide a range to be displayed on the display screen 122.

Since the effect 511 is displayed on the boundary of the safety zone 510, the players can easily judge the boundary on whether the HPs of their player characters 501-1 to 501-4 decrease. If the player characters 501-1 to 501-4 are out of the safety zone 510, the effect 512-2 is displayed onto the player character. Accordingly, the players can understand whether the HP is decreasing by only seeing the display state of their player characters instead of the status bars 601-1 to 601-4.

When the respective player characters 501-1 to 501-4 move out of the range displayed on the display screen 122 (namely, the range of the field of view of the virtual camera 301), the radar map 513-2 showing the position of the player character is displayed on the display screen 122. As a result, the player can easily understand the position in the virtual three-dimensional space even if his/her player character is not displayed on the display screen 122.

At the time of perspective-transformation of the virtual three-dimensional space, the visual axis 304 of the virtual camera 301 is controlled to be directed to the direction of the special object 500. However, when there is an obstacle between the position of the viewpoint 303 and the position of the special object 500, the position of the viewpoint 303 is moved. For this reason, the special object 500 is constantly displayed on the display screen 122. The constant display of the special object 500 exerts a large effect particularly on the game in which the presence of the special object 500 is important to the game progress. In addition, since the visual axis 304 is directed to the direction of the special object 500, the special object 500 is always displayed at the center of the display screen 122, resulting in a particularly large effect.

The present invention is not limited to the aforementioned embodiment, and various modifications and applications may be possible. The following will explain some modifications applicable to the present invention.

In the aforementioned embodiment, the range of the sphere with a predetermined distance from the position of the special object 500 was fixed as the safety zone 510, and the degree of advantage of the game progress changed depending on whether the player characters 501-1 to 501-4 were in or out of the safety zone 510. However, the present invention is not limited to this. The degree of advantage of the game progress can be changed by the following method according to the positional relationship between the special object 500 and each of the player characters 501-1 to 501-4.

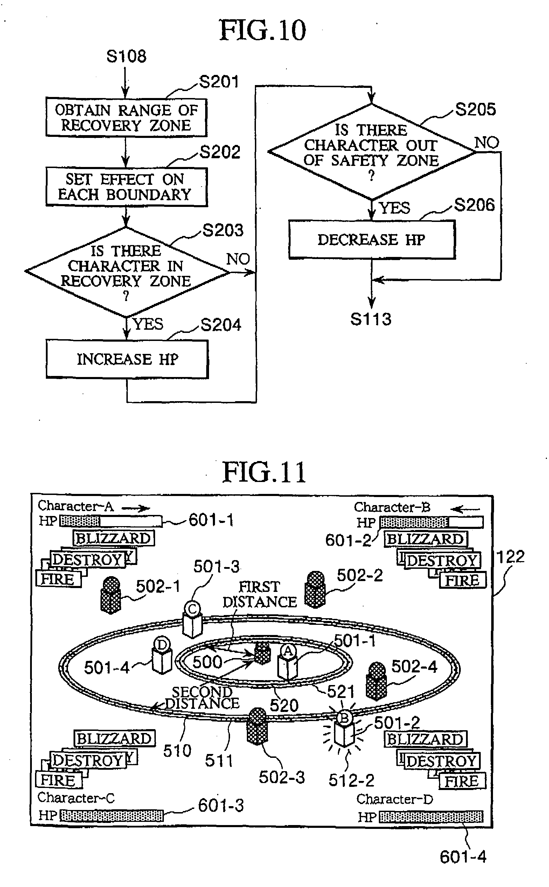

Regarding the number of boundaries of the range where the degree of advantage of the game progress, multiple boundaries may be provided. In a range much closer to the special object 500 than the safety zone 510, a recovery zone 520 where the HPs of the player characters 501-1 to 501-4 increase may be set (FIG. 11). FIG. 10 is a flowchart illustrating changes to be added to the flowchart in FIG. 5 according to this modification. FIG 11 is a view illustrating an example of the display screen 122 according to this modification.

In this modification, when the range of the safety zone 510 is fixed in step S108 in FIG 5, the control section 103 fixes a range of a sphere with a second distance, which is shorter than a first distance for fixing the safety zone 510, from the position of the special object 500 (object coordinates 401) as the recovery zone 520 (step S201). The control section 103 sets a position where the sphere, which fixes the range of the safety zone 510, and geographic data cross each other, as a boundary of the safety zone 510. Also, the control section 103 sets a position where the sphere, which fixes the range of the recovery zone 520, and geographic data cross each other, as a boundary of the recovery zone 520. Then, the control section 103 sets each of predetermined effects 511 and 521 on each boundary line (step S202).

The control section 103 determines whether there is at least one player character 501-1 to 501-4 within the range of the recovery zone 520 fixed in step S201 (step S203). When none of the player characters is within the range of the recovery zone 520, the processing flow proceeds to step S205. When there is at least one player character within the range of the recovery zone 520, the control section 103 increases the value of the HP for the corresponding player character data 403-1 to 403-4 by a predetermined amount until the value reaches a maximum value (step S204). Then, the processing flow proceeds to step S205.

In step S205, the control section 103 determines whether there is at least one player character 501-1 to 501-4 out of the range of the safety zone 510. When none of the player characters are out of the safety zone 510, the processing flow proceeds to step S113 in FIG. 5. When there is at least one player character out of the safety zone 510, the control section 103 decreases the value of the HP for the corresponding player character data 403-1 to 403-4 by a predetermined amount until the value reaches a predetermined value, that is not zero (step S206). Then, the processing flow proceeds to step S113 in FIG 5.

For example, on the display screen 122 in FIG. 11, the player character 501-1 is within the recovery zone 520. In this case, as can be seen from the status bar 601-1, the HP of the player character 501-1 increases. The player character 501-2 is out of the safety zone 510. In this case, as is shown by the status bar 601-2, the HP of the player character 501-2 decreases.

Each player can move his/her player character as close as possible to the special object 500 by providing multiple ranges each having a different degree of advantage around the special object 500 in this way. As a result, all of the player characters 501-1 to 501-4 are frequently present within the specific area around the special object 500, and they will be easily displayed on the display screen 122. Since the degree of advantage of the game progress changes, the freedom of movement of the player character will be higher than the aforementioned embodiment.

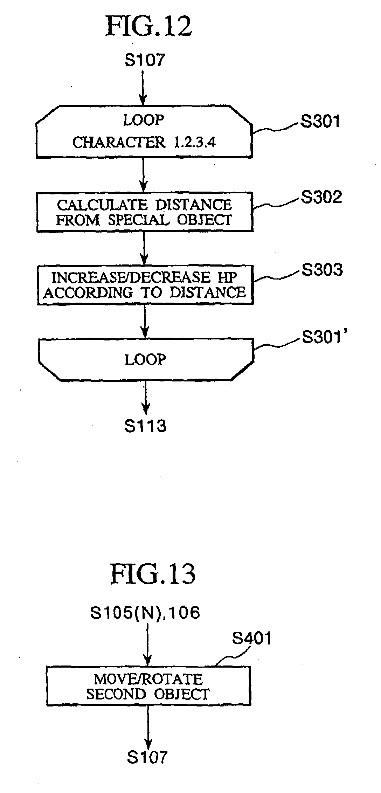

The degree of advantage of the game progress need not be tiered as in the aforementioned embodiment but rather a continuous change in the degree of advantage may be possible. The closer each of the player characters 501-1 to 501-4 is to the position of the special object 500, the higher the degree of advantage of the game progress becomes. Moreover, the farther each of the player characters 501-1 to 501-4 is from the position of the special object 500, the lower the degree of advantage of the game progress becomes. FIG 12 is a flowchart illustrating changes to be added to the flowchart in FIG. 5 according to this modification.

In this modification, when the direction of the visual axis 304 is set in step S107 in FIG 5, the control section 103 performs loop processing in steps S301 to S301' using the player characters 501-1 to 501-4 as processing objects, sequentially. In the loop processing, the control section 103 obtains a distance between the position of the processed player character and the special object 500 (step S302). The control section 103 obtains an increase or decrease in the HP value by substituting the distance obtained in step S302 in a predetermined computing equation, and increases or decreases the HP of the processed player character by the obtained value (step S303). After all of the player characters 501-1 to 501-4 are processed in steps S302 and S303, the processing flow proceeds to step S113 in FIG 5 through the loop processing in steps S301 to

### S301'.

Each player will move his/her player character as close as possible to the special object 500 by changing the degree of advantage of the game progress in this way. As a result, similar to the aforementioned embodiment, all of the player characters 501-1 to 501-4 are frequently present in the specific area around the special object 500, and they will be easily displayed on the display screen 122. Since the degree of advantage of the game progress changes continuously, the degree of freedom of movement of the player character will be further increased.

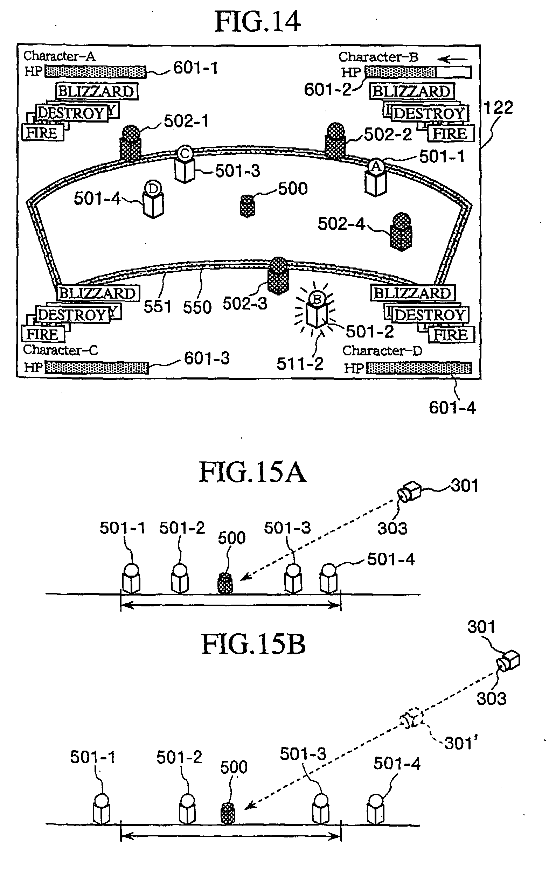

Regarding the shape of the boundary of the range where the degree of advantage of the game progress is changed, there is no need to have a specific shape such as a circle or a sphere, and any shape can be applied if the position of the special object 500 is fixed as a criterion. In this example, a second object 550 with an arbitrary shape (a sector in this case: FIG 14) is present in the virtual three-dimensional space in addition to the special object 500. The second object 550 moves in synchronization with movement of the special object 500, and rotates in synchronization with movement of the viewpoint 303. The position of the special object 500 is within the area of the second object 550. FIG. 13 is a flowchart illustrating changes to be added to the flowchart in FIG 5 according to this modification. FIG 14 is a view illustrating an example of the display screen 122 according to this modification.

In this modification, when a determination result in step S 105 in FIG 5 is NO or after the position of the viewpoint 303 is moved in step S106, the control section 103 moves the position of the second object 550 in synchronization with movement of the special object 500 in step S103. Also, the control section 103 rotates the position of the second object 550 around the Y-axis of the world coordinate system in synchronization with movement of the viewpoint 303 in step S106 (step S401). After that, the processing flow proceeds to step S107 in FIG 5.

In step S108 in FIG 5, the control section 103 fixes the range of the safety zone 510 such that an outer periphery of the second object 550 is used as a boundary. In step S 109, the control section 103 sets a predetermined effect 551 on the boundary fixed as the outer periphery of the second object 550 (FIG 14). In step S110, the control section 103 determines whether each of the player characters 501-1 to 501-4 is within the safety zone based on whether the X-coordinate and Y-coordinate of the player character 501 are present on the second object 550.

Regarding the area where the degree of advantage of the game progress is changed, the area can be shaped according to the area displayed on the display screen 122 at the time of perspective transformation of the virtual three-dimensional space by applying the second object 550 as an arbitrary shape. As a result, the range where the player characters 501-1 to 501-4 can be substantially freely moved can be expanded up to the entire area displayed as the display screen 122. All of the player characters 501-1 to 501-4 will be easily displayed on the display screen 122.

The area where the degree of advantage of the game progress is changed can be varied by the positional relationship between the special object 500 and each of the player characters 501-1 to 501-4. For example, the predetermined distance that fixes the safety zone 510 and/or the recovery zone 520 may be changed according to the game progress. The size and/or shape of the second object 550 may be changed according to the game progress. In the case where the increase and decrease in the HP value is obtained according to the distance between the position of the special object 500 and the position of each of the player characters 501-1 to 501-4 as the example in FIG 12, a parameter of the computing equation may be changed according to the game progress. When a change occurs in the special object 500 according to the game progress, the degree of advantage of the game progress can be changed in association with the change in the special object 500. In this case, the player will easily understand the change in the degree of advantage of the game.

A rate at which the degree of advantage of the game progress is changed by the positional relationship between the special object 500 and each of the player characters 501-1 to 501-4 can be also varied. For example, the maximum value of the HP can be changed according to the game progress. The value of HP, which decreases at the same rate when the player characters 501-1 to 501-4 are out of the safety zone 510, may increase as the maximum value of the HP increases. When a predetermined event occurs in the game progress, the value of the HP, which decreases at the same rate, may greatly increase as compared with a case in which the event does not occurs.

In the aforementioned embodiment, the position of the viewpoint 303 of the virtual camera 301 moved when the distance between the position of the viewpoint 303 and the position of the special object 500 exceeded the predetermined distance or there was an obstacle between the viewpoint 303 and the position of the special object 500. In contrast to this, the position of the viewpoint 303 may move in accordance with movement of the position of the special object 500. The X-coordinate and Z-coordinate of the viewpoint coordinates 402 are updated by the same amounts as the updated amounts of the X-coordinate and Z-coordinate of the object coordinates 401. This makes it possible to maintain the size of the range displayed on the display screen 122.

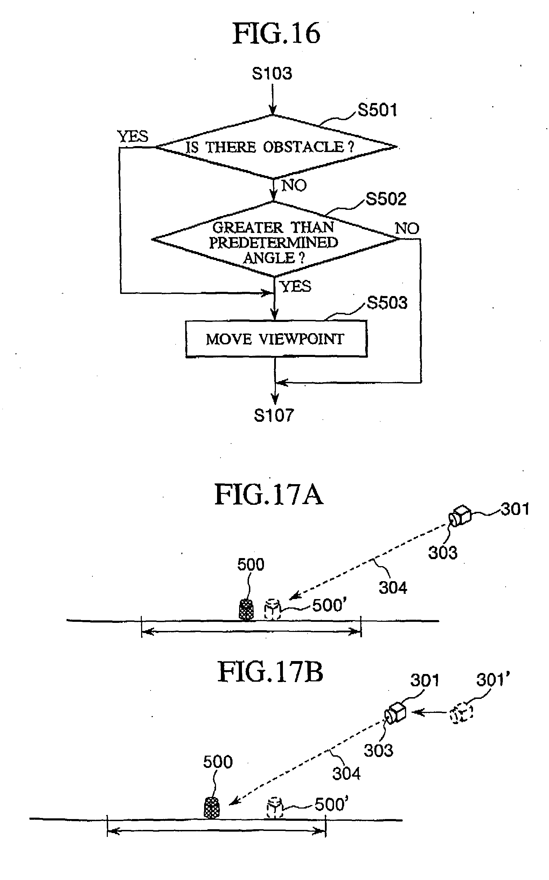

The position of the viewpoint 303 of the virtual camera 301 can be moved such that the player characters 501-1 to 501-4 can be displayed in the display screen as much as possible so that visibility is not lost. The position of the viewpoint 303 can be moved in accordance with the distance between the position of each of the player characters 501-1 to 501-4 and the position of the special object 500. FIGS. 15A and 15B show examples of the display screen 122 in this embodiment. These examples will be explained with the assumption that the position of the special object 500 does not move.

When the distance between each of the player characters 501-1 to 501-4 and the position of the special object 500 (that is applicable to both a maximum distance and an average distance) is short, it is assumed that the viewpoint 303 of the virtual camera 301 exists at a position as shown in FIG 15A. When the position of each of the player characters 501-1 to 501-4 moves to increase the distance between the position of each of the player characters 501-1 to 501-4 and the position of the special object 500, the position of the viewpoint 303 can be moved to increase the distance between the position of the special object 500 and the position of the viewpoint 303.

When the distance between each of the player characters 501-1 to 501-4 and the position of the special object 500 exceeds a fixed distance and increases, it is necessary to prevent the position of the viewpoint 303 from being moved. A maximum distance may be provided as the distance between the position of the special object 500 and the position of the viewpoint 303. The direction of the visual axis 304 can be always directed to the special object 500. Such movement of the position of the viewpoint 303 provides an appropriate balance between the display of all player characters 501-1 to 501-4 in the display screen 122 and improvement in visibility of the game screen.

In another embodiment, the position of the viewpoint 303 is not moved according to the distance between the position of each of the player characters 501-1 to 501-4 and the position of the special object 500. Rather the size in the field of view of the virtual camera 301 may be changed. The change in the field of view also provides an appropriate balance between the display of all player characters 501-1 to 501-4 in the display screen 122 and improvement in visibility of the game screen.

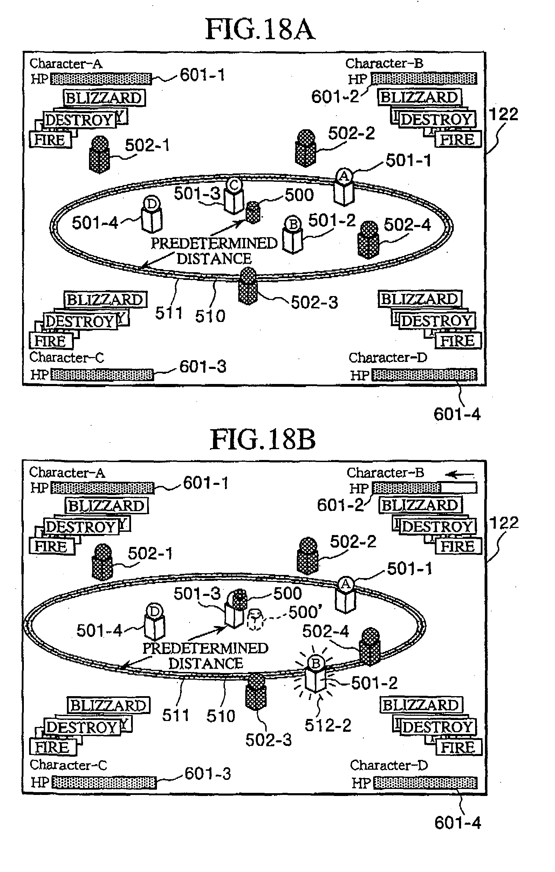

According to the aforementioned embodiment, when the position of the special object 500 moves largely, the position of the viewpoint 303 frequently moves in some cases. When the position of the viewpoint 303 frequently moves, there is a possibility that the player will not easily see the display screen 122 showing the game progress. Such a problem can be solved by the use of the following method. FIG 16 is a flowchart illustrating changes to be added to the flowchart in FIG 5 according to this modification. FIGS. 17A and 17B are views each explaining movement of the viewpoint 303 in this modification. FIGS. 18A and 18B are views each illustrating an example of the display screen 122 according to this modification.

In this embodiment, when the position of the special object 500 is moved in step S103 in FIG. 5, the control section 103 determines whether there is an obstacle between the position of the special object 500 and the position of the viewpoint 303 (step S501). When there is an obstacle therebetween, the processing flow proceeds to step S503. When there is no obstacle therebetween, the control section 103 determines whether an angle, which is formed by a straight line connecting the position of the viewpoint 303 to the position of the special object 500 and the visual axis 304, is greater than a predetermined angle (step S502). When the angle is smaller than the predetermined angle, the processing flow proceeds to step S 107 in FIG 5. When the angle is greater than the predetermined angle, the processing flow proceeds to step S503.

In step S503, the control section 103 moves the position of the viewpoint 303. In order to move the position of the viewpoint 303 when there is an obstacle, movement may be performed in the same way as the aforementioned embodiment. When the angle, which is formed by the straight line connecting the position of the viewpoint 303 to the position of the special object 500 and the visual axis 304, is greater than the predetermined angle, the control section 103 moves the position of the viewpoint 303 such that the direction of the visual axis 304 is consistent with the straight line connecting the position of the viewpoint 303 to the position of the special object 500 as maintaining an angle that the visual axis 304 forms with respect to an XZ surface of the world coordinate system (or to form a specific angle). After that, the processing flow proceeds to step S107 in FIG. 5.

As illustrated in FIG 17A, in the case where the direction of the visual axis 304 is directed to the direction of a previous position of the special object 500', if an amount of movement of the special object 500 is small and the angle, which is formed by the straight line connecting the position of the viewpoint 303 to the position of the special object 500 and the visual axis 304, is less than the predetermined angle, the direction of the visual axis 304 to the previous position of the special object 500' remains as it is. As illustrated in FIG. 17B, when an amount of movement of the special object 500 increases and the angle, which is formed by the straight line connecting the position of the viewpoint 303 to the position of the special object 500 and the visual axis 304, exceeds the predetermined angle, the position of the viewpoint 303 is moved.

The display screen 122 in this example will now be explained. Specifically, as illustrated in FIG 18A, at first, the direction of the visual axis 304 is directed to the position of the special object 500 and the special object 500 is displayed at the center on the display screen 122. Even if the special object 500 slightly moves, the display screen 122 is displayed in a state that the visual axis 304 is directed to the position of the previous object 500' as the central position as illustrated in FIG 18B.

In this modification, as in the aforementioned embodiment, it is not determined whether the distance between the position of the viewpoint 303 and the position of the special object 500 exceeds a predetermined distance. When the angle, which is formed by the straight line connecting the position of the viewpoint 303 to the position of the special object 500 and the visual axis 304, reaches the predetermined angle, the distance between the position of the viewpoint 303 and the position of the special object 500 is, of course, greater than the predetermined distance. For this reason, there is no need to carry out determination processing in step S 105 in FIG 5.

Instead of the determination whether the angle, which is formed by the straight line connecting the position of the viewpoint 303 to the position of the special object 500 and the visual axis 304, reaches the predetermined angle, it is possible to determine whether the distance between the present position of the special object 500 and the previous position is greater than a predetermined distance.

According to the modification illustrated in FIGS. 16 to 18B, even if movement of the special object 500 is frequently performed, the viewpoint 303 and the visual axis 304 are not moved and the same area can be displayed on the display screen 122 if the moving distance of the special object 500 is small. This eliminates the situation where the player cannot easily see the game screen.

In the aforementioned embodiment, when it was determined that one of the player characters 501-1 to 501-4 was moved off display screen 122, the two-dimensional radar map 513-2 was displayed in the foreground of the image where the virtual three-dimensional space was perspective-transformed and the position of the player character was displayed in the two-dimensional radar map 513-2. However, there is a possibility that the display of the two-dimensional radar map will reduce visibility of the game screen to other players.

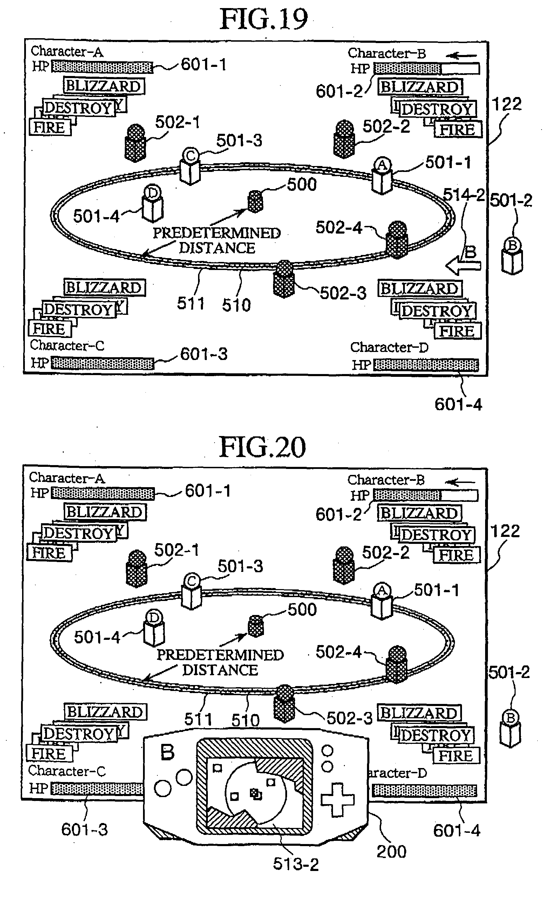

For this reason, as illustrated in FIG 19, an arrow 514-2 may be displayed in the foreground of the image where the virtual three-dimensional space is perspective-transformed. The arrow 514-2 indicates a direction where the player character 501-2, which is out of the display screen 122, should move in order to return to the display screen 122 (namely, a directional key to be operated). In this case, visibility of the game screen may not be reduced as compared with the case in which the two-dimensional radar map 513-2 is displayed.

When the portable game player 200 instead of the controller 161 is connected to the interface section 117, the two-dimensional radar map may be displayed on the LCD 215 provided in the portable game apparatus 200. When the player character is off the display screen 122, the control section 103 generates image data of the two-dimensional radar map showing the position of the player character and sends it to the portable game apparatus 200 from the interface section 117. The CPU 211 of the portable game apparatus 200 can display the two-dimensional radar map on the LCD 215 based on image data received from the video game apparatus 100.

Only instruction information for returning the player character to the display screen 122 may be displayed on the LCD 215 of the portable game apparatus 200. The instruction information can be displayed as an arrow indicating a directional key to be operated or a text message. Accordingly, even if one of the player characters 501-1 to 501-4 is off the display screen 122, the player, who operates the player character, can recognize the position of the player character accurately without reducing visibility of the game screen at all.

In the aforementioned embodiment, the degree of advantage of the game progress was changed by changing the HPs of the respective player characters 501-1 to 501-4 according to the positional relationship between the special object 500 and each of the player characters 501-1 to 501-4. In contrast to this, the degree of advantage of the game progress may be changed in connection with each of the player characters 501-1 to 501-4 by another method set forth below. For example, the power of attack and defense in the battle may be changed. The response speed to the operation from the controller 161 may be changed. A specific action may be disabled. The degree of advantage of the game program may be relatively changed. The degree of advantage of the game progress, which is lower than the criterion, does not always have to be used. Instead, when the player character is close to the special object 500, the degree of advantage of the game progress, which is higher than the criterion, may be used.

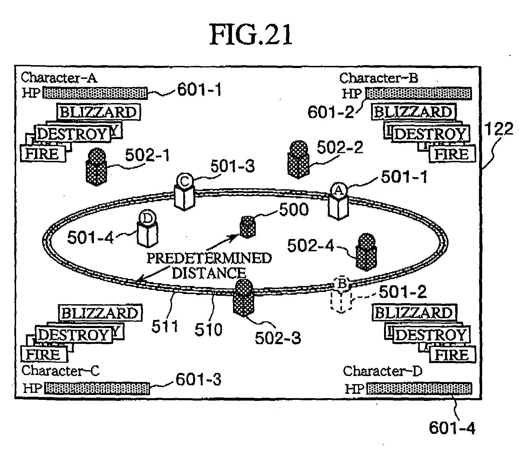

The degree of advantage of the game progress may not be changed with reference to the positional relationship between the special object 500 and each of the player characters 501-1 to 501-4. Instead of this, a degree of ease of the game progress may be changed. For example, as illustrated in FIG 21, semi-transparent polygon data having a high degree of transparency is applied to the player character 501-2, which is out of the safety zone 510 fixed around the special object 500, thereby allowing its visibility to be degraded. The player character 501-2, which is out of the safety zone 510 may be displayed small as compared with the time when it is within the safety zone 510.

Generally, since the player, who operates the player character 501-2, does not recognize the player character 501-2 easily, the game cannot be smoothly advanced. The player will return the player character 501-2 to the area within the safety zone 510 to advance the game. Accordingly, the degree of ease of the game progress such as visibility of the player character is changed, obtaining the same effect as the aforementioned embodiment. The change in the degree of ease of the game progress such as a change in visibility may be used together with the change in the degree of advantage of the game progress. The aforementioned modification examples can be applied to the case where the degree of ease of the game progress is changed.

In the aforementioned embodiment, the special object 500, which is the criterion that fixes the direction of the visual axis 304, is present in the virtual three-dimensional space together with the player characters and the non-player characters. However, a specific player character or non-player character may be the special object, depending on the contents of the game, and the safety zone and the direction of the visual axis 304 may be fixed with reference to this special object.

The special object 500 exists on the display screen 122 and this sometimes prevents the progress of the game, depending on the contents of the game. In order to avoid such a problem, a complete transparent object or an object that is recognized as dots having no size at all is used as the special object 500, making it possible to prevent the special object 500 from being displayed on the display screen 122. In the case where the safety zone is fixed using the second object 550, a second object 550 that is completely transparent may be used.

In the aforementioned embodiment, the present invention was explained using the example of a three-dimensional video game in which the visual axis 304 of the virtual camera 301 was controlled to be directed to the special object 500. In contrast to this, the present invention can be also applied to a two-dimensional video game. In the two-dimensional video game, in a two-dimensional space, an area having a center as the special object may be fixed as a screen display area.

In the aforementioned embodiment, the program for executing the video game of the present invention was stored in the storage medium 131 and distributed. In contrast to this, the program may be stored on a fixed disc apparatus provided in a Web server apparatus existing on the network 151. The Web server apparatus may convert the program and data stored in the fixed disc apparatus to a signal and superimpose the signal on a carrier wave, and distribute it to the video game main body 101 via the network 151. The program, which the communications interface 115 received from the Web server apparatus, can be stored in the HDD 107 and loaded to the RAM 105 at an executing time.

Although the invention has been described with reference to several exemplary embodiments, it is understood that the words that have been used are words of description and illustration, rather than words of limitation. Changes may be made within the purview of appended claims, as presently stated and as amended, without departing from the scope and spirit of the invention in its aspects. Although the invention has been described with reference to particular means, materials and embodiments, the invention is not intended to be limited to the particulars disclosed; rather, the invention extends to all functionally equivalent structures, methods, and uses such as are within the scope of the appended claims.

## Claims

1. A video game apparatus that advances a game when multiple players move their player characters in a virtual space, comprising:
multiple input devices that correspond to each of the multiple players and receives input instructions for each player character according to an operation of each player;
a player character mover that moves each player character in the virtual space based on the input instruction;
an object mover that moves a predetermined object in the virtual space;
a display controller that causes a display device to display a part of the virtual space with reference to the object;
a position judge that determines a positional relationship between each player character and the object; and
a game progress controller that changes at least one of a degree of advantage of a game progress and a degree of ease for each player character according to the determined positional relationship of each player character.

2. The video game apparatus according to claim 1, wherein said position judge determines whether a selected player character is within a predetermined area defined around the object, and said game progress controller changes at least one of the degree of advantage of the game progress and the degree of ease for each player character according whether the selected player character is within the predetermined area.

3. The video game apparatus according to claim 2, wherein said display controller comprises a device that causes said display device to display a predetermined effect on a boundary of the predetermined area.

4. The video game apparatus according to claim 2, wherein said display controller comprises a device that causes said display device to display a predetermined effect on a player character located outside of the predetermined area.

5. The video game apparatus according to claim 2, wherein the predetermined area includes multiple areas, each area being defined as a different distance from the object, wherein said position judge determines in which area each player character is located, and said game progress controller changes at least one of the degree of advantage of the game progress and the degree of ease for each player character according to which area each player character is located.

6. The video game apparatus according to claim 1, wherein said position judge determines a distance between the position of each player character and the position of the object, and said game progress controller changes at least one of the degree of advantage of the game progress and the degree of ease for each player character based on the determined distance.

7. The video game apparatus according to claim 1, further comprising a second object mover that moves a second object, having a predetermined shape and including the object, in synchronization with movement of the object, wherein said position judge determines whether each player character is located on said second object, and said game progress controller changes at least one of the degree of advantage of the game progress and the degree of ease for each player character based on whether each player character exists on the second object.

8. The video game apparatus according to claim 1, further comprising:
a display judge that determines whether each player character is included in a portion displayed by said display; and
an operation instructing device that instructs an operation method of said input devices to move each player character determined as being included in the non-displayed portion to the portion displayed by said display device.

9. The video game apparatus according to claim 8, wherein each of said input devices comprises an on-hand display device that is different from said display device, and said operation instructing device causes said on-hand display device to display the operation method.

10. The video game apparatus according to claim 1, wherein said virtual space is a three-dimensional space, and said display controller comprises a visual axis controller that controls a direction of a visual axis of a virtual camera with reference to the position of the object, a perspective-transformer that perspective-transforms the virtual three-dimensional space onto a virtual screen fixed a distance away from a viewpoint of the virtual camera to generate a two-dimensional image, and an image display controller that causes said display control device to display the two-dimensional image.

11. The video game apparatus according to claim 10, further comprising:
a display judge that determines whether each player character is included in a portion perspective-transformed onto the virtual screen; and
a radar map display controller that displays a two-dimensional radar map showing the position of a selected player character with reference to the position of the object when the selected player character is in a non-displayed portion.

12. The video game apparatus according to claim 11, wherein each of said input devices comprises an on-hand display device that is different from said display device, and said radar map display controller causes said on-hand display device to display the two-dimensional radar map.

13. The video game apparatus according to claim 10, wherein said display controller further comprises an obstacle judge that determines whether there is an obstacle between the viewpoint and the object, and a viewpoint mover that moves the position of the viewpoint to a position where there is no obstacle between the viewpoint and the object to control the direction of the visual axis with reference to the position of the object when the obstacle is between the viewpoint and the object.

14. The video game apparatus according to claim 10, wherein said display controller further comprises a viewpoint mover that moves the position of the viewpoint to control the direction of the visual axis with reference to the position of the object according to the determined the positional relationship between each player character and the object.

15. The video game apparatus according to claim 10, wherein said display controller further comprises a field-of-view changer that changes a field of view of the virtual camera to control the direction of the visual axis with reference to the position of the object according to the determined the positional relationship between each player character and the object.

16. The video game apparatus according to claim 10, wherein said visual axis controller controls the direction of the visual axis to be directed to the position of the object.

17. The video game apparatus according to claim 1, wherein said game progress controller varies an area in which at least one of the degree of advantage of the game progress and the degree of ease is changed according to a degree of the game progress.

18. The video game apparatus according to claim 1, wherein said game progress controller differentiates a rate at which at least one of the degree of advantage of the game progress and the degree of ease is changed according to a degree of the game progress.

19. The video game apparatus according to claim 1, wherein the degree of advantage of the game progress is changed by changing a status of any player character.

20. The video game apparatus according to claim 1, wherein the degree of ease of the game progress is changed by changing a visibility of any player character.

21. The video game apparatus according to claim 1, wherein the object is not displayed on said display device.

22. A video game apparatus that advances a game when multiple players move their player characters in a virtual space, said video game apparatus having a memory that stores a game program and a processor that executes said game program and multiple input devices provided to correspond to each of the multiple players, and a display device that displays a processing result of said processor, wherein said game program is stored in said memory and causes said processor to execute:
inputting an instruction to a player character of each player from said multiple input devices;
moving each player character in the virtual space based on the input instruction;
moving a predetermined object in the virtual space;
causing the display device to display a part of the virtual space with reference to the moved object;
determining a positional relationship between each moved player character and the object; and
changing at least one of a degree of advantage of a game progress and a degree of ease for each player character according to a determined positional relationship of each player character.

23. A video game progress control method for advancing a video game when multiple players move their player characters in a virtual space, comprising:
inputting an instruction to a player character of each player from multiple input devices;
moving each player character in the virtual space based on the input instruction;
moving a predetermined object in the virtual space;
causing a display device to display a part of the virtual space with reference to the moved object;
determining a positional relationship between each moved player character and the object; and
changing at least one of a degree of advantage of a game progress and a degree of ease for each player character according to a determined positional relationship of each player character..

24. A computer-readable storage medium on which a game program for executing a video game that advances when multiple players move their player characters in a virtual space is recorded, said game program causing a computer apparatus to execute:
inputting an instruction to a player character of each player from multiple input devices;
moving each player character in the virtual space based on the input instruction;
moving a predetermined object in the virtual space;
causing a display device to display a part of the virtual space with reference to the moved object;
determining a positional relationship between each moved player character and the object; and
changing at least one of a degree of advantage of a game progress and a degree of ease for each player character according to a determined positional relationship of each player character..

25. A carrier wave having a data signal of a game program for executing a video game that advances when multiple players move their player characters in a virtual space, which is superimposed thereon, wherein said game program causes a computer apparatus to execute:
inputting an instruction to a player character of each player from multiple input devices;
moving each player character in the virtual space based on the input instruction;
moving a predetermined object in the virtual space;
causing a display device to display a part of the virtual space with reference to the moved object;
determining a positional relationship between each moved player character and the object; and
changing at least one of a degree of advantage of a game progress and a degree of ease for each player character according to a determined positional relationship of each player character..
